# EUROPEAN PATENT APPLICATION

(11) **EP 2 380 828 A1**
(43) Date of publication of application: **26.10.2011**
(21) Application number: 10161079.8
(22) Date of filing: 26.04.2010
(51) Int. Cl.: B65G 1/04

(54) **Device for storing objects to be received successively close to a feed element**

(71) Applicant: Apollo Vts B.V., 7741MJ Coevorden (NL)
(72) Inventor: Duim, Arnold Robert, 7741MJ Coevorden (NL)
(74) Representative: Mink-Lindenburg, Charlotte Hildegard

(57) **Abstract**

Device for storing objects to be received successively close to a feed element, comprising a storage device provided with at least one storage container and a first displacing device (5) which is provided with a first transport container, which displacing device is adapted to displace the transport container between a loading position lying close to and/or under the feed element and an unloading position lying close to and/or above the storage container, and wherein the first transport container and the storage container are adapted to receive each object.

## Description

The invention relates to a device for storing objects such as porcelain, glass or metal to be received successively close to a feed element, comprising a storage device provided with a storage container and a first displacing device which is adapted to displace the at least one object in three degrees of freedom.

Such devices are known in the field, such as from German patent publication 31036164, in which a device for picking and placing is described for the purpose of picking up objects close to an outer end of a conveyor belt using a gripping device, wherein the gripping device can be displaced relative to the conveyor belt in three directions oriented transversely relative to each other, between a vicinity of the conveyor belt and a vicinity of a container for the purpose of storing the objects one above another in a storage device.

The device for picking and placing according to the German patent has the drawback that objects situated close to the conveyor belt can be damaged during gripping with the gripping device and placing of the objects on a storage device. In order to have the gripping and placing of the objects take place in careful manner the gripping device can be provided with for instance a first sensor for measuring a distance of gripping means relative to the object during approach, and a second sensor for measuring a gripping force and/or clamping force with which the gripping means engage on the object during gripping. Systems equipped with the first and/or the second sensor comprise a control which collects measurement data during the picking and placing, on the basis of which the gripping device is further controlled. These systems are applied in robots which can be deployed in flexible manner and are overqualified for performing displacement of objects from a substantially fixed receiving position to a substantially predetermined delivery position in a standardized storage device.

A further drawback of this known device for picking and placing objects is that the conveyor belt for feeding objects extends relative to a floor at a height lying at a position substantially half the height of the device arranged on the floor for the picking and placing. If the conveyor belt is in a lower position, such as for instance close to the floor, the gripping device must bridge a greater height in order to pick up objects, so that the gripping device is engaged in displacing objects for a longer time, this to the detriment of the capacity of the device for picking and placing. Another further drawback of the device for picking and placing is that objects placed on a stack make it difficult to access a layer situated thereunder and impede a flexible access.

It is an object of the invention to provide a device for storing objects which is intended for placing close to a feed element such as a conveyor belt. The invention provides an alternative to the use of an overqualified robot which can be employed in flexible manner for picking and placing, and a method for displacing objects without the objects being damaged during picking and placing thereof.

The device for storing objects to be received successively close to a feed element is provided according to the invention with a storage device provided with at least one storage container, a first displacing device which is provided with a first transport container, which displacing device is adapted to displace the transport container between a loading position lying close to and/or under the feed element and an unloading position lying close to and/or above the storage container, and wherein the first transport container and the storage container are adapted to receive each object.

This advantageous embodiment provides a device for receiving industrial objects, which are for instance supplied via a conveyor belt and come from a processing centre, and for storing in storage containers the objects which must be stored in a storage device. At the transition of the object from the loading position to the unloading position no gripping contact occurs, whereby no compression of the object under the influence of the gripping thereof can occur, but the object undergoes a gentle support and guiding during a displacement from the transport container to the storage container. During the receiving, further displacement and placing of the objects in the storage device with the device according to the invention the risk of breakage of and/or damage to the objects is reduced and minimized without the device comprising components which are normally applied in robots, such as for instance a first sensor which measures a first distance from the container to the loading position during displacement of the container without object and/or a second sensor, such as an approach sensor, which measures a second distance from the container to the unloading position during displacement of the container provided with an object. The device according to the invention has a further advantage of saving costs on a gripping device. The saving is considerable because the gripping device must be provided with sensors for measuring the force with which the gripping device clamps the object. For the purpose of careful placing of the object at the unloading position it is further possible to save costs on a sensor with which a force can be measured during placing of the object at the unloading position.

In an efficient embodiment the device further comprises an array of storage containers and a second displacing device for successively displacing each storage container between a loading position of the storage container and a storage position in the storage device. It hereby becomes possible to fill a storage device with a plurality of storage containers without interposing a further storage container which forms part of a further process. If desired, the storage device can be filled as a module and for instance discharged when the storage device is completely full, after which a new, empty storage device can be placed for filling thereof.

In an embodiment the storage device extends over a height from a positioning plane in the longitudinal direction thereof and the storage device is adapted to receive a plurality of storage containers, wherein the storage device comprises a first guide which is oriented parallel to the longitudinal direction thereof for a first substantially linear displacement of the storage container at a distance from the storage device, and comprises a second guide which is oriented transversely of the longitudinal direction thereof for a second substantially linear, inward and/or outward displacement of the at least one storage container. In an embodiment the storage device is adapted to store a plurality of storage containers one above another. It hereby becomes possible to place objects in a storage device which is suitable for a modular handling in a further logistical process. In an embodiment the storage containers can be disposed slidably in the storage device. This measure avoids the storage of storage containers stacked on top of each other, wherein a further storage container placed under the storage container last placed on the stack is difficult to access. The measure enables a flexible exchange of storage containers, wherein a storage container can be removed from the storage device irrespective of which storage container was previously placed in the storage device.

In a practical embodiment the second displacing device comprises first elements co-acting with the first guide for a first substantially linear displacement of the at least one storage container parallel to the longitudinal direction of the storage device for the purpose of positioning the at least one storage container close to the storage device, and the second displacing device comprises a third guide, which can be placed in register with the second guide, for a second substantially linear displacement of the at least one storage container which is directed inward relative to the storage device for the purpose of inserting and/or removing storage containers. It hereby becomes possible for instance to apply a lifting table which can displace the storage container accurately between the loading position and the storage position thereof and can position it reliably in the loading position and in the storage position.

In an embodiment the first displacing device comprises a lifting element for a lifting displacement of the transport container. In an embodiment the transport container is coupled pivotally to the lifting element. In an embodiment the at least one lifting element comprises close to a first outer end thereof a first pivot for rotating the lifting element relative to the positioning plane, wherein the first pivot is situated close to the positioning plane. In an embodiment the lifting element comprises close to a second outer end remote from the first outer end a second pivot for rotating the transport container relative to the at least one lifting element. In an embodiment the at least one lifting element is adapted to at least bridge a distance in a direction parallel to the longitudinal direction of the storage device, this distance being substantially equal to half the height over which the storage device extends in the longitudinal direction. In an embodiment the at least one lifting element has a length which is such that half the height over which the storage device extends in the longitudinal direction can be reached in the unloading position of the transport container. These measures make it possible to displace objects from a lower loading position to a higher unloading position, and vice versa. An efficient filling can also be achieved because the average distance to be bridged is minimal and a displacement of the storage container from the unloading position amounts to a maximum of half the height of the storage device.

In an important embodiment a third displacing device is arranged on the second displacing device for the purpose of displacing a further transport container which is adapted to displace the at least one object, which third displacing device comprises a fifth guide for a third substantially linear displacement of the further transport container transversely of the longitudinal direction of the storage device and at a distance therefrom, wherein the fifth guide extends over substantially the storage container and wherein the further transport container is situated in a loading position close to and below the unloading position of the transport container and is situated in an unloading position close to and above the storage container. In an embodiment the further transport container is adapted to receive each object. Using the further transport container it becomes possible in a loading position thereof to receive objects from the first container situated in an unloading position thereof, to displace them further to an unloading position of the third container situated close to and above the storage container, and to deliver them in this unloading position, for instance by tilting or tipping out, wherein the further transport container can be displaced via the fifth guide above the storage container for the purpose of placing the object at a desired location above the storage container. A control of the device can fill the storage container with objects on the basis of a programmed sequence. The storage container can thus be divided into compartments for storing at least an object per compartment.

In a further embodiment the first and/or the second and/or the further transport container can be opened close to a side thereof directed toward the positioning plane of the storage device for the purpose of unloading objects situated in the containers. This advantageous embodiment provides an alternative to the containers which are disposed tiltably for the unloading of objects placed therein, and makes possible a container with a bottom which can be opened during unloading of an object.

In a practical embodiment the containers are generally box-like. This embodiment makes it possible to hold an object, which may for instance begin to vibrate during displacement thereof or tips over inside the container, without the object falling out of the box.

In an efficient embodiment a further storage device is arranged mirror-symmetrically relative to the storage device and placed at a distance relative to the storage device. This efficient embodiment enables a continuous operation in which, for instance after the filling of the first storage device, the second storage device can be filled without the operation of the device for receiving form-retaining industrial objects close to a feed element and delivering them in ordered manner close to a storage device having to be halted. After the filled first storage device has been removed an at least partially empty third storage device can be placed for the purpose of being filled with objects once the process of filling the second storage device has been completed.

In a simple embodiment at least one contact surface of the transport container and/or the storage container intended for objects is provided with a resilient layer. This practical embodiment makes a further soft landing possible for the purpose of receiving very brittle and/or fragile objects without damage.
Figure 1 is a schematic top view of a storage device for taking up and setting down industrial objects which is disposed in an environment in which the objects can be produced and stored.
Figure 2 is a schematic perspective view of the storage device according to figure 1, comprising a first and a second displacing device.
Figure 3 is a schematic perspective view of the storage device according to figure 2, wherein a further displacing device is placed between the first and the second displacing device.
Figure 4 is a schematic perspective view of the second and the further displacing device of the storage device according to figure 3.

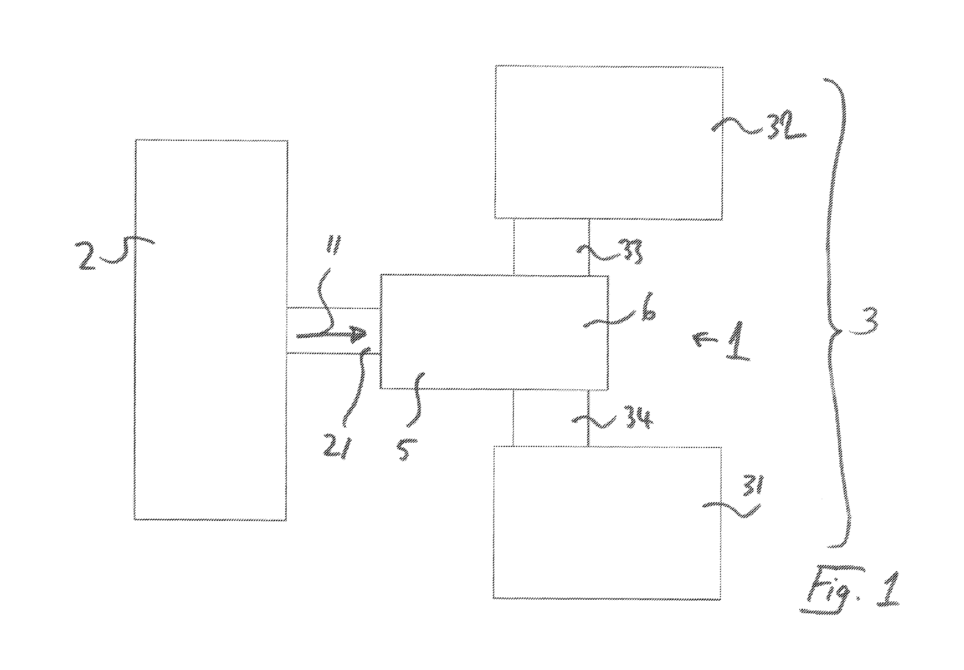

Figure 1 shows a device 1 according to the invention for taking up and setting down industrial objects which are displaced in a flow 11 from a processing centre 2 to a storage device 3. The device according to the invention is further also referred to in this description as a storage device 1. In this example processing centre 2 is embodied as a CNC machine in which industrial objects are manufactured and/or further processed. The industrial objects can be made from porcelain, glass, plastic or metal. The device is particularly suitable for objects which are delicate and/or fragile, or at least easily damaged.

The delicate objects can break or at least be damaged when gripped by a gripping device. When being placed on a surface or in a container the objects can come to rest thereon or therein with too much force or be released too early, whereby the objects can break or at least be damaged. Objects which are made of metal and provided with sharp edges can for instance collide with further edges or surfaces when gripped and placed by a gripping device, wherein an edge of the object can be damaged, resulting for instance in a burr.

For displacing objects downstream from processing centre 2 to storage device 1 there is arranged a feed element such as a conveyor belt 21 on which objects can be fed in substantially singulated manner. Disposed further downstream inside storage device 1 in this embodiment are a first and a second storage device 31, 32 in which, at least in the shown embodiment, the objects reach a temporary final destination via respectively a first and second feed unit 33, 34. Storage device 1 comprises a first and a second displacing device 5, 6, which are shown in further figures.

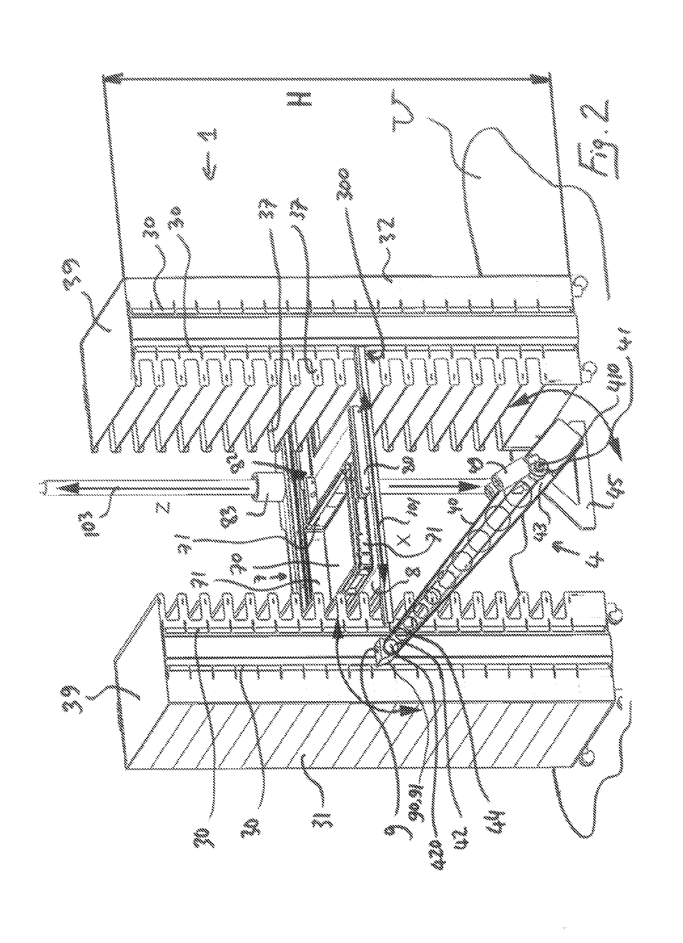

Figure 2 shows storage device 1 according to the invention, wherein the first and second storage devices 31, 32 are placed opposite each other such that open sides thereof are directed toward each other for the insertion and removal of transport containers such as crates 7. Storage devices 31, 32 are thus placed mirror-symmetrically relative to each other on a positioning surface V, such as a floor or floor surface V, and extend in the longitudinal direction thereof to a height H suitable for storing, in this embodiment, eighteen crates 7 per storage device 31, 32. A plurality of crates 7 can be pushed into and stored in each storage device 31, 32, wherein crates 7 can be empty or at least partially filled with objects. Crates 7 can be stacked one above another and can have been and/or can be filled in a flexible sequence, wherein a random subsequent crate 7 can be removed from storage device 31, 32 irrespective of a previously placed crate 7.

On either side of the open side of storage device 31, 32, close to an outward facing side thereof, storage device 31, 32 is provided with first guides 30 which are oriented parallel to the longitudinal direction of storage device 31, 32. Figure 2 shows only two first guides 30 per storage device 31, 32, which are placed close to the side thereof. Each storage device 31, 32 comprises four first guides 30 and together they comprise eight first guides 30 along which a lifting table 8 can be displaced parallel to a Z-axis 103 running parallel to the longitudinal direction of storage device 31, 32. Lifting table 8, which is provided with elements 300 co-acting with first guides 30, comprises a drivable element 82 which can co-act with drive element 83 for the purpose of displacing lifting table 8 along the Z-axis. Drive element 83 is a per se known system wherein drivable element 82 is for instance a nut arranged non-rotatably on lifting table 8 and wherein drive element 83 is a spindle which, under the influence of a rotation thereof, can displace the lifting table parallel to Z-axis 103. In an embodiment the drive system for a displacement along Z-axis 103 can be provided with a mechanism in which a toothed belt can act as drive element. With the system the lifting table 8 can substantially bridge the height H between substantially floor surface V and an uppermost part 39 of storage devices 31, 32, wherein lifting table 8 can come to a stop at predetermined heights in order to receive and/or insert crates 7 respectively from and/or into storage device 31, 32.

For insertion and removal of crates 7 storage device 31, 32 is provided on either side of the open side of storage device 31, 32, close to an inward facing side thereof, with second guides 37 which are oriented transversely of the longitudinal direction of storage device 31, 32.

For the purpose of placing a crate 7 on lifting table 8 and storing crate 7 in storage device 31, 32, lifting table 8 is provided with third guides 80 which can be placed substantially in register with second guides 37 of storage device 31, 32. Third guides 80 can extend a path for crate 7 along second guide 37 through a displacement of lifting table 8 along Z-axis 103 in order to guide crate 7 into or out of storage device 31, 32 during insertion and removal thereof.

Figure 2 shows a crate 7 which is placed on lifting table 8 in order to be filled with at least one object which can be supplied using a pivot mechanism 4. Crate 7 is provided with an underside 70 for supporting at least one object and which is provided in this embodiment with four sides 71 placed substantially transversely of underside 70 and together substantially forming a rectangle, such that crate 7 has a top part which is substantially open. Crate 7 is adapted for placing of objects therein from above. For displacing of crate 7 along second and third guides 37, 80, crate 7 is provided on either side thereof with fourth guides 77 which can co-act with both second and third guides 37, 80 and are oriented parallel to X-axis 101. Fourth guides 77 are disposed parallel to second and/or third guide 37, 80 and placed at a distance therefrom for a displacement of fourth guide 77 parallel relative to second and third guides 37, 80, wherein fourth guide 70 is situated substantially abutting second and/or third guide 37, 80.

Pivot mechanism 4 comprises a base 45 placed on the floor surface V, a lifting element 40, in this example a pivot arm 40, pivotable relative to base 45 and a transport container 9, in this embodiment a tipping box 9, rotatable relative to pivot arm 40. Close to a first outer end 43 facing toward base 45 the pivot arm 40 is provided with a first pivot 41 for a rotation of pivot arm 40 about a first shaft 410. Close to a second outer end 44 remote from first outer end 43 the pivot arm 40 is provided with a second pivot 42 for a rotation of tipping box 9 about a second shaft 420. First and second shafts 410, 420 are placed substantially parallel relative to each other at first and second outer ends 41, 42 of pivot arm 40 for the purpose of lifting objects from a low-lying loading position to a higher unloading position. First and second shafts 410, 420 are oriented substantially transversely of the direction of second, third and fourth guides 37, 80, 77 for a displacement of tipping box 9 in a plane parallel to at least a side wall 71 of the crate comprising fourth guide 77.

Pivot arm 40 of storage device 1 is suitable for receiving objects from a feed part of a conveyor belt 21 arranged close to floor surface V. For the purpose of receiving objects a rotation of pivot arm 40 is necessary toward the loading position in which tipping box 9 is situated close to and under the feed part of conveyor belt 21. In an arrangement of the feed part of conveyor belt 21 close to floor surface V the pivot arm 40 is situated, as in this embodiment, in the loading position in which the longitudinal direction thereof, which extends along a line through first and second pivot points 410, 420, is oriented substantially transversely of the longitudinal direction of storage device 31, 32.

Tipping box 9 is adapted to load fragile objects from the conveyor belt by receiving them, and tipping box 9 is further adapted to unload the objects by tilting or tipping them into for instance a crate 7. Tipping box 9 has an underside 90 which is provided with upright sides 91 for preventing lateral displacements of objects placed therein. Tipping box 9 is provided close to a side thereof remote from underside 90 with an opening for loading and unloading of fragile objects. Tipping box 9 is connected pivotally relative to pivot arm 40 such that objects cannot fall out of the tipping box in either the loading position or in a random intermediate position located between the loading position and the unloading position. In order to achieve this, tipping box 9 is for instance held substantially horizontal in these positions, wherein during a rotation of the pivot arm about first shaft 410 tipping box 9 is rotated about second shaft 420 relative to pivot arm 40 by for instance a servomotor and/or stepping motor. As soon as tipping box 9 is in the unloading position the servomotor and/or stepping motor can rotate tipping box 9 further about second shaft 420 relative to stationary pivot arm 40 such that the at least one object is tipped out of tipping box 9 and lands for instance in a crate 7.

In a preferred embodiment the unloading position of tipping box 9 lies halfway along the height H of storage device 31, 32, wherein filling of storage device 31, 32 takes place with a very favourable efficiency. Filling of storage device 31, 32 from the centre has the effect that the displacement of crates 7 along Z-axis 103 to the first outer end of storage device 31, 32, such as close to the floor surface V, and to the second outer end remote from the first outer end of storage device 31, 32, such as close to the upper part 39 thereof, covers the same distance. In this embodiment the distance between first and second shafts 41, 42 of pivot arm 40 is such that in the unloading position tipping box 9 is situated substantially halfway along the height H of storage device 31, 32, wherein the longitudinal direction of pivot arm 40 is oriented substantially parallel to the longitudinal direction of storage device 31, 32. The length of the pivot arm is in general adapted such that tipping box 9 is situated in the unloading position thereof substantially halfway along the height H of storage device 31, 32.

Storage device 1 is suitable for receiving objects coming via a conveyor belt 21 from a processing centre 2 using tipping box 9 at a loading position, wherein the feed part of conveyor belt 21 is situated close to floor surface V. In an embodiment the feed part can be situated at a level higher than floor surface V. In order to enable efficient filling of the storage device, the length of pivot arm 40 in such an embodiment is modified such that tipping box 9 is situated in the unloading position thereof substantially halfway along the height H of storage device 31, 32. In a further embodiment pivot mechanism 4 can be disposed in a plane directed transversely of second guide 37 or forming an angle therewith. In an embodiment in which conveyor belt 21 is placed at a distance from second displacing device 6, wherein the distance extends only in a direction parallel to Z-axis 103, the pivot mechanism can be replaced by a lifting device which is provided with transport container 9, such as a tipping box 9, the lifting device being adapted to displace objects in a direction extending only parallel to Z-axis 103.

For the purpose of receiving an object, pivot arm 40 is actuated by a drive, such as in this embodiment a motor such as a servomotor or a stepping motor 49, in order to displace the tipping box 9 pivotable on pivot arm 40 to the loading position. Tipping box 9 is provided with a sensor for detecting the presence of an object. When the presence of an object is detected, the tipping box 9 pivotable on pivot arm 40 is rotated to the unloading position by drive 49.

Storage device 1 thus comprises a first displacing device 5 comprising pivot arm 40 disposed rotatably on base 45 with a tipping box 9 arranged rotatably on pivot arm 40, and a second displacing device 6 comprising lifting table 8 for supporting a crate 7, wherein lifting table 8 is provided with third guide 80 and wherein crate 7 is provided with fourth guide 77 co-acting with third guide 80, which lifting table 8 comprises a drive for inserting and removing a crate 7 into and from storage device 31, 32, and which lifting table 8 is displaceable parallel to the longitudinal direction of storage device 31, 32 in order to displace crate 7 in a direction parallel to Z-axis 103.

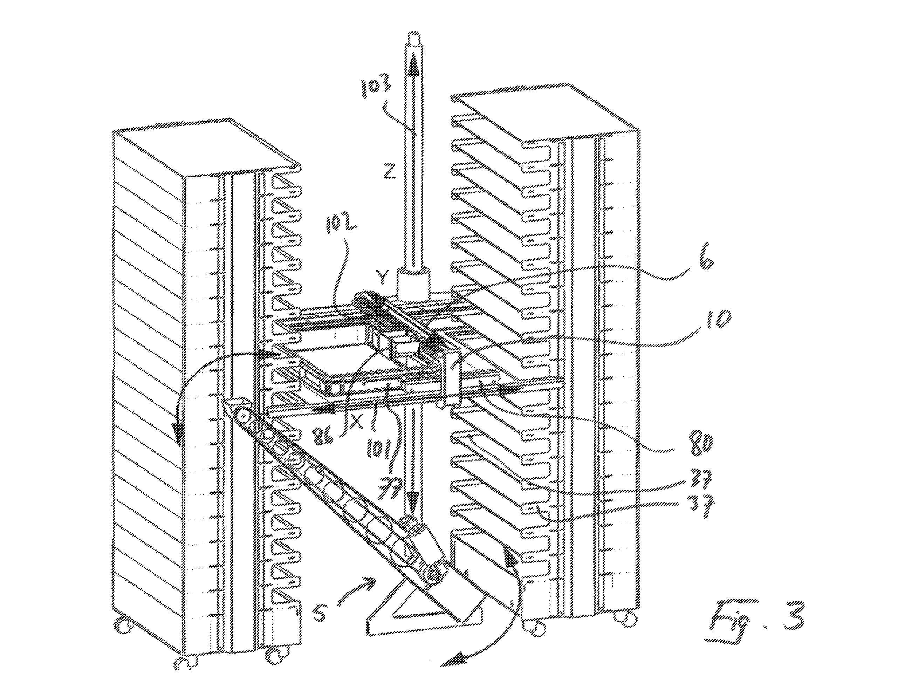

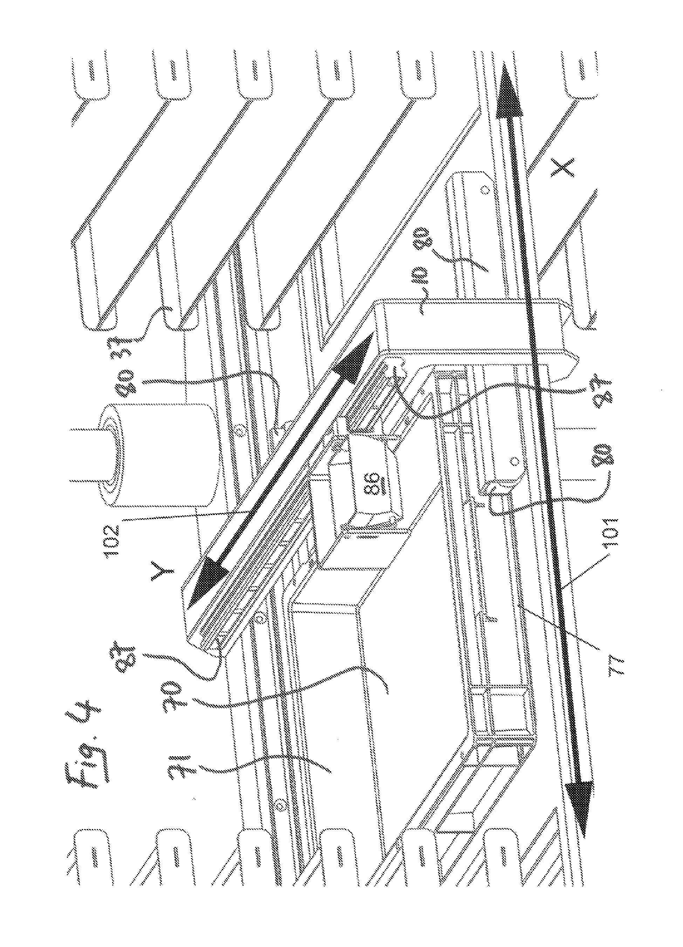

In order to provide crates 7 of storage device 1 with a plurality of objects, crate 7 can be divided into compartments as shown in figures 3 and 4, for instance by partitions placed in crates 7 which are placed substantially parallel to two side walls of crate 7 and/or are directed transversely thereof. For the purpose of filling each compartment the lifting table 8 is provided with a third displacing device 10 which is adapted to displace a second transport container 86 between a further loading position and a further unloading position thereof in a direction parallel to Y-axis 102. In the further loading position the second transport container 86 is situated close to and under tipping box 9 if it is situated in the unloading position of tipping box 9. In the further unloading position the second transport container 86 is situated close to and above a compartment present in crate 7 for placing of an object. Third displacing device 10 is adapted in this embodiment for a third displacement of second transport conveyor 86 along a fifth guide 87 which is placed transversely of the longitudinal direction of second and third guides 37, 80 and transversely of the longitudinal direction of first guide 30. Second transport container 86 is provided with elements 88 co-acting with fifth guide 87 for guiding the third displacement.

Third displacing device 10 can thus reach a further position in crate 7. By displacing crate 7 further parallel to second and third guides 37, 80 relative to lifting table 8, third box 86 can reach a further position in crate 7.

In an embodiment the first and/or second transport container 9, 86 is disposed pivotally relative to respectively the first and/or third displacing device 10 for tilting or tipping first and/or second transport container 9, 86 during emptying thereof. In another embodiment the underside of first and/or second transport container 9, 86 can be opened for emptying thereof.

The invention is of course not limited to the described and shown preferred embodiment(s). The invention relates generally to any embodiment falling within the scope of protection as defined in the claims and as seen in the light of the foregoing description and accompanying drawings. The length and a pivoting movement of pivot arm 40 is thus related to the location of the loading position relative to the location of the unloading position of the transport container. In a particular situation in which the location of the loading position and the location of the unloading position of transport container 9 lie along a line parallel to Z-axis 103, a lifting device can be applied which is adapted solely for a lifting movement parallel to Z-axis 103. In addition to an embodiment as tipping box 9, transport container 9 can also be embodied according to the invention as basket or net made for instance from fabric or cane.

## Claims

1. Device for storing objects to be received successively close to a feed element (21), comprising:
- a storage device (3) provided with at least one storage container (7);
- a first displacing device (5) which is provided with a first transport container (9), which displacing device (5) is adapted to displace the transport container (9) between a loading position lying close to and/or under the feed element (21) and an unloading position lying close to and/or above the storage container (7), and
wherein the first transport container (9) and the storage container (7) are adapted to receive each object.

2. Device as claimed in claim 1, further comprising an array of storage containers (7) and a second displacing device (6) for successively displacing each storage container (7) between a loading position of the storage container (7) and a storage position in the storage device (3).

3. Device as claimed in claim 1 or 2, wherein the storage device (3) extends over a height H from a positioning plane V in the longitudinal direction thereof and is adapted to receive a plurality of storage containers (7), wherein the storage device (3) comprises a first guide (30) which is oriented parallel to the longitudinal direction thereof for a first substantially linear displacement of the storage container (7) at a distance from the storage device (3), and comprises a second guide (37) which is oriented transversely of the longitudinal direction thereof for a second substantially linear, inward and/or outward displacement of the at least one storage container (7).

4. Device as claimed in any of the foregoing claims, wherein the storage device (3) is adapted to store a plurality of storage containers (7) one above another.

5. Device as claimed in any of the foregoing claims, wherein the storage containers (7) can be disposed slidably in the storage device (3).

6. Device as claimed in any of the claims 3-5, when dependent on claim 2, wherein the second displacing device (6) comprises first elements (300) co-acting with the first guide (30) for a first substantially linear displacement of the at least one storage container (7) parallel to the longitudinal direction of the storage device (3) for the purpose of positioning the at least one storage container (7) close to the storage device (3), and comprises a third guide (80), which can be placed in register with the second guide (37), for a second substantially linear displacement of the at least one storage container (7) which is directed inward relative to the storage device (3) for the purpose of inserting and/or removing storage containers (7).

7. Device as claimed in claim 6, wherein the first displacing device (5) comprises a lifting element (40) for a lifting displacement of the transport container (9).

8. Device as claimed in claim 7, wherein the transport container (9) is coupled pivotally to the lifting element (40).

9. Device as claimed in claim 7 or 8, wherein the at least one lifting element (40) comprises close to a first outer end (43) thereof a first pivot (410) for rotating the lifting element (40) relative to a positioning plane V of the storage device (3), wherein the first pivot (410) is situated close to the positioning plane V, wherein the lifting element (40) comprises close to a second outer end remote from the first outer end (43) a second pivot (420) for rotating the transport container (9) relative to the at least one lifting element (40), wherein the at least one lifting element (40) is adapted to at least bridge a distance in a direction parallel to the longitudinal direction of the storage device (3), this distance being substantially equal to half the height (H) over which the storage device (3) extends in the longitudinal direction, and wherein the at least one lifting element (40) has a length substantially equal to half the height (H) over which the storage device extends in the longitudinal direction.

10. Device as claimed in any of the foregoing claims, wherein a third displacing device (10) is arranged on the second displacing device (6) for the purpose of displacing a further transport container (86) which is adapted to displace the at least one object, which third displacing device (10) comprises a fifth guide (87) for a third substantially linear displacement of the further transport container (86) transversely of the longitudinal direction of the storage device (3) and at a distance therefrom, wherein the fifth guide (87) extends over substantially the storage container (7), and wherein the further transport container (86) is situated in a loading position close to and below the unloading position of the transport container (9) and is situated in an unloading position close to and above the storage container (7).

11. Device as claimed in claim 10, wherein the further transport container (86) is adapted to receive each object.

12. Device as claimed in any of the foregoing claims, wherein the first and/or the second and/or the further transport container (9), (7), (86) can be opened close to a side thereof directed toward the positioning plane V of the storage device (3) for the purpose of unloading objects situated in the containers (9), (7), (86).

13. Device as claimed in any of the foregoing claims, wherein the containers (9), (7), (86) are generally box-like.

14. Device as claimed in any of the foregoing claims, wherein a further storage device (3) is arranged mirror-symmetrically relative to the storage device (3) and placed at a distance relative to the storage device (3).

15. Device as claimed in any of the foregoing claims, wherein at least one contact surface of the transport container and/or the storage container intended for objects is provided with a resilient layer.
